# EUROPEAN PATENT SPECIFICATION

(11) **EP 4 144 539 B1**
(45) Date of publication and mention of the grant of the patent: **22.01.2025**
(21) Application number: 22193017.5
(22) Date of filing: 30.08.2022
(51) Int. Cl.: B60C 9/26, B60C 9/20

(54) **PNEUMATIC TIRE FOR USE ON TRUCK**
LUFTREIFEN ZUR VERWENDUNG AUF EINEM LASTWAGEN
PNEUMATIQUE POUR CAMION

(30) Priority: 01.09.2021 US 202163260818 P; 29.06.2022 US 202217809598
(43) Date of publication of application: 08.03.2023
(73) Proprietor: The Goodyear Tire & Rubber Company, Akron, OH 44316 (US)
(72) Inventor: PASSANTE SPACCAPIETRA, Ettore, L-9070 Ettelbruck (LU); MULLER, Philippe Joseph Auguste, B-6971 Champlon (BE); COCCON, Marco Nicolo, L-2230 Luxembourg (LU); MANOGARAN, Arun Prasath, L-7740 Colmar-Berg (LU)
(74) Representative: Kutsch, Bernd

(56) References cited:
- EP-A1- 2 065 226
- JP-A- 2004 322 783
- US-A- 3 831 656
- US-A- 5 201 969

## Description

### Field of Invention

The invention relates in general to pneumatic tires, and more particularly to pneumatic tires for vehicles such as trucks.

### Background of the Invention

The commercial truck market is moving towards an increase in overall vehicle weight, which is due in part to the increase in weight of the motor and equipment. The increase in overall vehicle weight requires a tire capable of handling the additional loading. Thus, a tire with improved crown durability and increased load carrying capacity is desired.

US 3,831,656 A describes a tire in accordance with the preamble of claim 1.

A similar tire is also known from EP 2 065 226 A1. In this tire, the folded belts do not overlap with shoulder circumferential grooves in the axial direction, however.

JP 2004 322783 A describes a further truck tire having a folded ply.

### Definitions

"Aspect Ratio" means the ratio of a tire's section height to its section width.

"Axial" and "axially" mean the lines or directions that are parallel to the axis of rotation of the tire.

"Bead" or "Bead Core" mean generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Belt Structure" (or "Reinforcing Belts" or "Belt Package") means at least two annular layers or plies of parallel cords, woven or unwoven, underlying the tread, unanchored to the bead.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Circumferential" means lines or directions perpendicular to the axial direction.

"Cord" means one of the reinforcement strands, including fibers, which are used to reinforce the plies.

"Extensible" means a cable, cord, wire, or reinforcement having an elongation at 10% of the breaking load greater than 0.2%, when measured from a cord extracted from a cured tire. The tensile measurements such as the load at break (maximum load in N), strength at break (in MPa) and elongation at break (total elongation in %) are performed in tension in accordance with ISO 6892-1B (2019) at a pre-load no more than 10 MPa tested on a cable or wire when taken from a cured tire.

"Inner Liner" means the layer or layers of elastomer or other material that form the inside surface of a tubeless tire and that contain the inflating fluid within the tire.

"Ply" means a cord-reinforced layer of elastomer-coated, radially deployed or otherwise parallel cords.

"Radial" and "radially" mean directions radially toward or away from the axis of rotation of the tire.

"Radial Ply Structure" means the one or more carcass plies or which at least one ply has reinforcing cords oriented at an angle of between 65° and 90° with respect to the equatorial plane of the tire.

### Summary of the Invention

The invention relates to a tire in accordance with claim 1.

Dependent claims refer to preferred embodiments of the invention.

In accordance with the invention, a pneumatic tire is provided comprising a tread and a belt structure located radially inward of the tread, the belt structure including a pair of working belts, wherein the working belts are reinforced plies each comprising parallel reinforcement elements, wherein the angle of the reinforcement elements in the respective working belt ranges from 12 degrees to 35 degrees with respect to the circumferential direction, wherein the belt structure further includes a relatively low angle belt preferably positioned radially between the working belts, the relatively low angle belt comprising parallel reinforcement elements angled at less than 5 degrees, preferably less than 2 degrees, with respect to the circumferential direction, wherein the relatively low angle belt has folded belt edges forming a first and second narrow belt at the lateral ends of the relatively low angle belt, and wherein the first and second narrow belt are each positioned radially inward of and each at least partially extend axially under a respective axially outermost groove on each respective lateral side of the tread.

In accordance with a preferred aspect of the invention, the reinforcement elements in the working belts and/or in the relatively low angle belt have an elongation at 10% of the breaking load greater than 0.2%, alternatively greater than 0.4%, when measured at the reinforcement elements extracted from a cured tire.

In accordance with a preferred aspect of the invention, the reinforcement elements in the working belts and/or in the relatively low angle belt are wires comprising steel or are hybrid cords.

In accordance with a preferred aspect of the invention, the axial width of each of the narrow belts is in the range of from 2.54 cm to 7.62 cm and/or the axial width of each of the narrow belts is less than 1/3, preferably in a range of from 5 percent to 20 percent, of the tread arc width.

In accordance with a preferred aspect of the invention, the axial width of each of the narrow belts is in the range of one to two times, preferably 1.2 to 1.8 times, the axial width of the respective groove located radially outward of the respective narrow belt.

In accordance with a preferred aspect of the invention, the reinforcement elements in the working belts and/or in the relatively low angle belt have an elongation at 10% of the breaking load greater 0.8% or greater than 1.5%, when measured at the reinforcement elements extracted from a cured tire.

In accordance with a preferred aspect of the invention, the radially inner working belt has an axial width equal or about equal to the tread arc width or in a range of from 95 percent to 105 percent of the tread arc width.

In accordance with a preferred aspect of the invention, the radially outer working belt has an axial width less, preferably at least 5 percent less, than the radially inner working belt; and/or and wherein the radially inner working belt is the axially widest belt of the belt structure.

In accordance with a preferred aspect of the invention, the relatively low angle belt has an axial width in the range of from 70 to 80 percent of the tread arc width.

In accordance with a preferred aspect of the invention, the tire further includes a top belt as the radially outermost belt of the belt structure.

In accordance with a preferred aspect of the invention, the tire further includes a transition belt located radially inwards of the working belts.

In accordance with a preferred aspect of the invention, the transition belt comprises parallel reinforcement elements making an angle in a range of from 45 to 70 degrees, preferably from 45 to 70 degrees right, with the circumferential direction; and/or wherein the transition belt has an axial width in a range of from 60 to 80 percent of the tread arc width.

In accordance with a preferred aspect of the invention, the aspect ratio of the tire is less than or equal to 0.6.

In accordance with a preferred aspect of the invention, the folded belts each comprise parallel reinforcement elements angled at the same angle as the adjacent second working belt.

In accordance with the invention, the tire further comprises a rubber spacer layer located between the folded belt edges that preferably extends over at least 80 percent, more preferably at least 95 percent, of the axial distance between the axially innermost ends of the folded belt edges.

### Brief Description of the Drawings

The invention will be described by way of example and with reference to the accompanying drawings in which:
FIG. 1 is a cross-sectional view of a first embodiment of a one half of a tire crown area of the present invention illustrating the belt package; and
FIG. 2 is a schematic of a belt layup trajectory for the zero degree full and folded belt edges.

### Detailed Description of Preferred Embodiments of the Invention

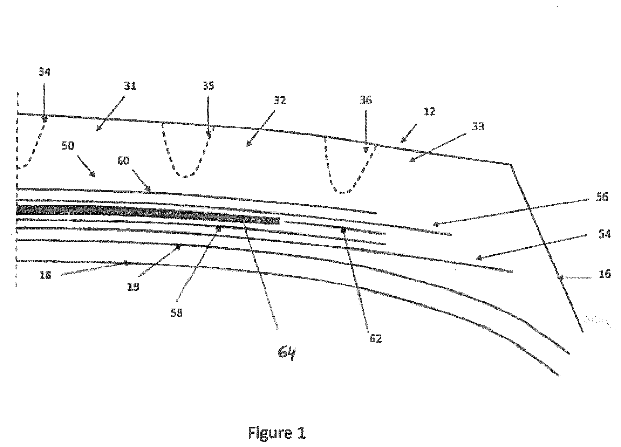

FIG. 1 illustrates a first embodiment of a pneumatic tire, suitable for use as a truck tire. The tire 10 has a tread 12 with a non-skid depth. The tire tread 12 comprises a plurality of circumferentially continuous ribs, which may vary, but are shown for example as ribs 31, 32 and 33. Positioned between each rib are circumferential grooves 34, 35, 36, which are preferably continuous. The tread may also comprise optional sipes (not shown). The tread pattern is not limited to same, and may comprise, for example, a plurality of blocks and grooves (not shown).

The tire 10 further comprises a casing which includes two opposed sidewalls 16 which extend down from the tread 12 to the bead area (not shown). The casing of the tire preferably includes an inner liner 18 which is typically formed of halobutyl rubber which forms an air impervious barrier. The tire casing preferably further includes one or more radial plies 19 extending from the tread, down the sidewall to the tire bead and wrapped about or otherwise secured to each annular bead.

The tire 10 further includes a belt package 50 which is located between the tread and the one or more casing plies 19. The belt package comprises layers of reinforcement. The ply 19 and the belt reinforcing structure 50 are made from cord reinforced elastomeric material, wherein the cords are preferably steel wire or polyamide filaments and the elastomer preferably being rubber.

The belt reinforcing structure 50 includes a radially innermost first working belt 54. The first working belt 54 is located radially inwards of the second working belt 56 and is preferably the widest belt layer of the belt reinforcing structure 50. The first working belt 54 has a width which is preferably equal or, about equal, i.e., ± 5%, to the tread arc width. The breaker angle of belt 54 is between 10 and 50 degrees, preferably with a right orientation, more preferably in the range of 19 to 25 degrees. Belt 54 is preferably made of extensible wire which has a % elongation at 10% of breaking load of greater than 0.2%. The wire is preferably a hybrid cord or a steel wire.

The second working belt 56 is the second member of the working belt pair. The second working belt 56 has a width less than the width of the first working belt 54 and is preferably radially outward of the first working belt 54. Preferably, the second working belt 56 has a width less than the width of belt 54 by a step off, which preferably ranges from 10 to 20 mm. Belt 56 has a breaker angle between 12 and 35 degrees, preferably with a left orientation, more preferably in the range of 19 to 25 degrees. Belt 56 is preferably made of extensible wire and is the same as the wire of the first working belt 54. More preferably, the wire has the same construction with the same but opposite angular orientation as the wire of belt 54.

The belt structure 50 further comprises a relatively low angle belt 58 which is preferably located between the working pair belts, 54, 56. The relatively low angle belt 58 has reinforcements that are oriented circumferentially at 5 degrees or less, preferably 2 degrees or less, more preferably 0 degrees. The relatively low angle belt 58 has a belt width which is preferably less than the belt width of the working belts 54, 56.

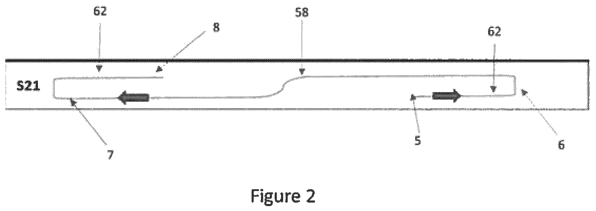

The relatively low angle belt 58 is preferably formed from spirally winding a rubberized strip of one or more cords in a pattern as shown in FIG. 2. Preferably, the strip has 3, 4 or 5 steel cords, and has a width in the range of from 5 to 10 mm, more preferably from 4 to 6 mm. As shown in FIG. 2, a rubberized strip of reinforcement cords is wound on a drum, starting on the right-hand side 5 of the drum, at a location axially inward from the right edge of the drum. The strip is applied at the starting location 5 and then helically wound in an axially outward direction towards the axially outer edge 6 of the drum. The strip is then wound in a change of direction towards the left-hand side 7 of the drum. The strip direction is then reversed and wound towards the center of the drum terminating at point 8. As shown in FIG. 2, the layup results in a wide relatively low angle belt 58 that has folded belt edges 62, wherein the relatively low angle belt has folded belt edges forming a first and second narrow belt 62 at the lateral ends of the relatively low angle belt. The folded belt edges 62 have a relatively narrow axial width and are located on each lateral edge of the belt and are positioned radially inward of the axially outermost shoulder groove 36. The folded belt edge belt 62 preferably is the narrowest belt. The axial width of the folded belt 62 is preferably in the range of one to four times the axial width of the groove 36. Preferably, the folded belt 62 has the same angle and orientation as the adjacent belt 56. As best shown in FIG. 1, a rubber spacer 64 is preferably located between the folded belt edges 62, and functions to fill the void between the folded belt edges 62.

The relatively low angle belt 58 has a width sized to avoid compression in the shoulder area. The belt width of the relatively low angle belt 58 is preferably in the range of 70% to 80% of the tread arc width, and even more preferably in the range of 73-77%. The relatively low angle belt 58 is preferably wide enough to decrease the strain cycles in the breaker wedge and is just stopped before the shoulder area to avoid zero degree wire compression and a too round footprint.

The relatively low angle belt 58 is preferably formed using high tensile steel and preferably has a % elongation at 10% of breaking load of 0.18 or more, for measurements taken from a cured tire. For measurements taken from bare cords, the % elongation at 10% of breaking load is 0.2 or more. Alternatively, the relatively low angle belt 58 may be formed using non-metal reinforcements such as aramid, carbon fiber, polyketone or POK.

The belt structure 50 may further comprise an optional top belt 60. This top belt 60 preferably has an axial width less than the working belts 54, 56.

The aspect ratio of the tire described above may vary. The aspect ratio is preferably in the range of from 0.4 to 0.6 such as 0.45 or 0.55.

The tire preferably has a net to gross ratio in the range of 70 to 90, more preferably in the range of 74 to 86, more preferably a 78 to 84.

## Claims

1. A pneumatic tire comprising a tread (12) and a belt structure (50) located radially inward of the tread (12), the belt structure (50) including a pair of working belts (54, 56), wherein the working belts (54, 56) are reinforced plies each comprising parallel reinforcement elements, wherein the angle of the reinforcement elements in the respective working belt (54, 56) ranges from 12 degrees to 35 degrees with respect to the circumferential direction, wherein the belt structure (50) further includes a relatively low angle belt (58) preferably positioned radially between the working belts (54, 56), the relatively low angle belt (58) comprising parallel reinforcement elements angled at less than 5 degrees, preferably less than 2 degrees, with respect to the circumferential direction, wherein the relatively low angle belt (58) has folded belt edges (62) forming a first and second narrow belt at the lateral ends of the relatively low angle belt (58), and wherein the first and second narrow belt are each positioned radially inward of and each at least partially extend axially under a respective axially outermost groove (36) on each respective lateral side of the tread (12), **characterized in that** the belt structure (50) further comprises a rubber spacer layer (64) located between the folded belt edges (62).

2. The tire of claim 1 wherein the reinforcement elements in the working belts (54, 56) and/or in the relatively low angle belt (58) have an elongation at 10% of the breaking load greater than 0.2%, alternatively greater than 0.4%, when measured at the reinforcement elements extracted from a cured tire.

3. The tire of claim 1 or 2 wherein the reinforcement elements in the working belts (54, 56) and/or in the relatively low angle belt (58) are wires comprising steel or are hybrid cords.

4. The tire of at least one of the previous claims wherein the axial width of each of the narrow belts is in the range of from 2.54 cm to 7.62 cm and/or wherein axial width of each of the narrow belts (63) is less than 1/3, preferably in a range of from 5 percent to 20 percent, of the tread arc width.

5. The tire of at least one of the previous claims wherein the axial width of each of the narrow belts is in the range of one to two times, preferably 1.2 to 1.8 times, the axial width of the respective groove (36) located radially outward of the respective narrow belt (63).

6. The tire of at least one of the previous claims wherein the reinforcement elements in the working belts (54, 56) and/or in the relatively low angle belt (58) have an elongation at 10% of the breaking load greater 0.8% or greater than 1.5%, when measured at the reinforcement elements extracted from a cured tire.

7. The tire of at least one of the previous claims wherein the radially inner working belt (54) has an axial width equal or about equal to the tread arc width or in a range of from 95 percent to 105 percent of the tread arc width.

8. The tire of at least one of the previous claims wherein the radially outer working belt (56) has an axial width less, preferably at least 5 percent less, than the radially inner working belt (54); and/or and wherein the radially inner working belt (54) is the axially widest belt of the belt structure (50).

9. The tire of at least one of the previous claims wherein the relatively low angle belt (58) has an axial width in the range of from 70 to 80 percent of the tread arc width.

10. The tire of at least one of the previous claims further including a top belt (60) as the radially outermost belt of the belt structure (50).

11. The tire of at least one of the previous claims further including a transition belt located radially inwards of the working belts (54, 56).

12. The tire of claim 11 wherein the transition belt comprises parallel reinforcement elements making an angle in a range of from 45 to 70 degrees, preferably from 45 to 70 degrees right, with the circumferential direction; and/or wherein the transition belt has an axial width in a range of from 60 to 80 percent of the tread arc width.

13. The tire of at least one of the previous claims wherein the aspect ratio of the tire is less than or equal to 0.6.

14. The tire of at least one of the previous claims wherein the rubber spacer layer (64) extends over at least 80 percent, more preferably at least 95 percent, of the axial distance between the axially innermost ends of the folded belt edges (62).

## Patentansprüche

1. Luftreifen, der eine Lauffläche (12) und eine Gürtelstruktur (50) umfasst, die in der radialen Richtung innerhalb der Lauffläche (12) aufgebracht ist; wobei die Gürtelstruktur (50) ein Paar von Arbeitsgürteln (54, 56) enthält; wobei die Arbeitsgürtel (54, 56) verstärkte Lagen darstellen, die jeweils parallele Verstärkungselemente umfassen; wobei der Winkel, der durch die Verstärkungselemente in dem jeweiligen Arbeitsgürtel (54, 56) gebildet wird, in dem Bereich von 12 Grad bis 35 Grad in Bezug auf die Umfangsrichtung liegt; wobei die Gürtelstruktur (50) ferner einen Gürtel (58) umfasst, der einen relativ kleinen Winkel bildet, der in der radialen Richtung vorzugsweise zwischen den Arbeitsgürteln (54, 56) positioniert ist; wobei der Gürtel (58), der einen relativ kleinen Winkel bildet, parallele Verstärkungselemente umfasst, die einen Winkel von mindestens weniger als 5 Grad, vorzugsweise weniger als 2 Grad, in Bezug auf die Umfangsrichtung bilden; wobei der Gürtel (58), der einen relativ kleinen Winkel bildet, umgeschlagene Gürtelkanten (62) aufweist, die einen ersten und einen zweiten schmalen Gürtel an den seitlichen Enden des Gürtels (58) bilden, der einen relativ kleinen Winkel bildet; und wobei der erste und der zweite schmale Gürtel jeweils in der radialen Richtung innerhalb einer jeweiligen in der axialen Richtung äußersten Nut positioniert sind und sich jeweils in der axialen Richtung zumindest teilweise unterhalb der oben genannten Nut auf jeder jeweiligen seitlichen Seite der Lauffläche (12) erstrecken, **dadurch gekennzeichnet, dass** die Gürtelstruktur (50) ferner eine als Abstandshalter dienende Gummischicht (64) umfasst, die zwischen den umgeschlagenen Gürtelkanten (62) aufgebracht ist.

2. Luftreifen nach Anspruch 1, wobei die Verstärkungselemente in den Arbeitsgürteln (54, 56) und/oder in dem Gürtel (58), der einen relativ kleinen Winkel bildet, eine Dehnung bei 10 % Bruchlast haben, die größer als 0,2 %, alternativ größer als 0,4 %, ist, wenn sie an den Verstärkungselementen gemessen wird, die aus einem Reifen in vulkanisiertem Zustand entnommen wurden.

3. Luftreifen nach Anspruch 1, wobei die Verstärkungselemente in den Arbeitsgürteln (54, 56) und/oder in dem Gürtel (58), der einen relativ kleinen Winkel bildet, Metalldrähte sind, die Stahl umfassen oder Hybridcorde darstellen.

4. Luftreifen nach einem der vorhergehenden Ansprüche, wobei die axiale Breite jedes der schmalen Gürtel in dem Bereich von 2,54 cm bis 7,62 cm liegt und/oder wobei die axiale Breite jedes der schmalen Gürtel (36) weniger als 1/3, vorzugsweise in einem Bereich von 5 Prozent bis 20 Prozent, der Konturbreite der Lauffläche ausmacht.

5. Luftreifen nach einem der vorhergehenden Ansprüche, wobei die axiale Breite jedes der schmalen Gürtel in dem Bereich des Ein- bis Zweifachen, vorzugsweise des 1,2- bis 1,8-fachen der axialen Breite der jeweiligen Nut (36) liegt, die in der radialen Richtung außerhalb des jeweiligen schmalen Gürtels (63) aufgebracht ist.

6. Luftreifen nach einem der vorhergehenden Ansprüche, wobei die Verstärkungselemente in den Arbeitsgürteln (54, 56) und/oder in dem Gürtel (58), der einen relativ kleinen Winkel bildet, eine Dehnung bei 10 % Bruchlast haben, die größer als 0,8 % oder größer als 1,5 % ist, wenn sie an den Verstärkungselementen gemessen wird, die aus einem Reifen in vulkanisiertem Zustand entnommen wurden.

7. Luftreifen nach einem der vorhergehenden Ansprüche, wobei der in der radialen Richtung innere Arbeitsgürtel (54) eine axiale Breite hat, die gleich oder ungefähr gleich der Konturbreite der Lauffläche ist oder in einem Bereich liegt, der 95 Prozent bis 105 Prozent der Konturbreite der Lauffläche ausmacht.

8. Luftreifen nach einem der vorhergehenden Ansprüche, wobei der in der radialen Richtung äußere Arbeitsgürtel (56) eine axiale Breite aufweist, die kleiner, vorzugsweise um mindestens 5 Prozent kleiner als der in der radialen Richtung innere Arbeitsgürtel (54) ist; und/oder der in der radialen Richtung innere Arbeitsgürtel (54) der in der axialen Richtung breiteste Gürtel der Gürtelstruktur (50) ist.

9. Luftreifen nach einem der vorhergehenden Ansprüche, wobei der Gürtel (58), der einen relativ kleinen Winkel bildet, eine axiale Breite hat, die in einem Bereich liegt, der 70 Prozent bis 80 Prozent der Konturbreite der Lauffläche ausmacht.

10. Luftreifen nach einem der vorhergehenden Ansprüche, der außerdem einen oberen Gürtel (60) als den in der radialen Richtung äußersten Gürtel der Gürtelstruktur (50) enthält.

11. Luftreifen nach einem der vorhergehenden Ansprüche, der außerdem einen Übergangsgürtel enthält, der in der radialen Richtung am weitesten innen von den Arbeitsgürteln (54, 56) liegt.

12. Luftreifen nach Anspruch 11, wobei der Übergangsgürtel parallele Verstärkungselemente umfasst, die mit der Umfangsrichtung einen Winkel bilden, der in einem Bereich von 45 bis 70 Grad, vorzugsweise von 45 bis 70 Grad nach rechts, liegt; und/oder wobei der Übergangsgürtel eine axiale Breite hat, die in einem Bereich liegt, der 60 bis 80 Prozent der Konturbreite der Lauffläche ausmacht.

13. Luftreifen nach einem der vorhergehenden Ansprüche, wobei das Aspektverhältnis des Reifens kleiner als oder gleich 0,6 ist.

14. Luftreifen nach einem der vorhergehenden Ansprüche, wobei sich die als Abstandshalter (64) dienende Gummischicht über eine Strecke erstreckt, die mindestens 80%, bevorzugter mindestens 95%, des axialen Abstands zwischen den in der axialen Richtung innersten Enden der umgeschlagenen Gürtelkanten (62) beträgt.

## Revendications

1. Bandage pneumatique qui comprend une bande de roulement (12) et une structure de ceintures (50) qui est située, dans la direction radiale, à l'intérieur de la bande de roulement (12) ; dans lequel la structure de ceintures (50) englobe une paire de ceintures de travail (54, 56) ; dans lequel les ceintures de travail (54, 56) représentent des nappes renforcées qui comprennent chacune des éléments de renforcement parallèles ; dans lequel l'angle formé par les éléments de renforcement dans la ceinture de travail respective (54, 56) se situe dans la plage allant de 12 degrés à 35 degrés par rapport à la direction circonférentielle ; dans lequel la structure de ceintures (50) englobe en outre une ceinture (58) qui forme un angle relativement petit, qui est de préférence positionnée entre les ceintures de travail (54, 56) ; dans lequel la ceinture (58) formant un angle relativement petit comprend des éléments de renforcement parallèles qui forment un angle au moins inférieur à 5 degrés, de préférence au moins inférieur à 2 degrés par rapport à la direction circonférentielle ; dans lequel la ceinture (58) formant un angle relativement petit possède des bords de ceintures repliés (62) qui forment une première et une seconde ceinture étroite aux extrémités latérales de la ceinture (58) formant un angle relativement petit ; et dans lequel la première et la seconde ceinture étroite sont chacune positionnées à l'intérieur, dans la direction radiale, d'une rainure respective la plus externe dans la direction axiale, et s'étendent dans la direction axiale, au moins en partie, en dessous de ladite rainure sur chaque côté latéral respectif de la bande de roulement (12), **caractérisé en ce que** la structure de ceinture (50) comprend en outre une couche en caoutchouc faisant office d'élément d'espacement (64), qui est située entre les bords de ceintures repliés (62).

2. Bandage pneumatique selon la revendication 1, dans lequel les éléments de renforcement dans les ceintures de travail (54, 56) et/ou dans la ceinture (58) qui forme un angle relativement petit possèdent un allongement à 10 % de la charge de rupture qui est supérieur à 0,2 %, en variante supérieur à 0,4 %, lorsqu'on le mesure aux éléments de renforcement que l'on a extraits d'un bandage pneumatique à l'état vulcanisé.

3. Bandage pneumatique selon la revendication 1, dans lequel les éléments de renforcement dans les ceintures de travail (54, 56) et/ou dans la ceinture (58) qui forme un angle relativement petit sont des fils métalliques qui comprennent de l'acier ou représentent des câblés hybrides.

4. Bandage pneumatique selon l'une quelconque des revendications précédentes, dans lequel la largeur axiale de chacune des ceintures étroites se situe dans la plage allant de 2,54 cm à 7,62 cm et/ou dans lequel la largeur axiale de chacune des ceintures étroites (36) représente moins de 1/3, de préférence se situe dans une plage allant de 5 pour cent à 20 pour cent, de la largeur de l'arc de la bande de roulement.

5. Bandage pneumatique selon l'une quelconque des revendications précédentes, dans lequel la largeur axiale de chacune des ceintures étroites se situe dans la plage allant de une à deux fois, de préférence de 1,2 à 1,8 fois la largeur axiale de la rainure respective (36) qui est disposée à l'extérieur, dans la direction radiale, de la ceinture étroite respective (63).

6. Bandage pneumatique selon l'une quelconque des revendications précédentes, dans lequel les éléments de renforcement dans les ceintures de travail (54, 56) et/ou dans la ceinture (58) qui forme un angle relativement petit possèdent un allongement à 10 % de la charge de rupture qui est supérieur à 0,8 % ou supérieur à 1,5 %, lorsqu'on le mesure aux éléments de renforcement que l'on a extraits d'un bandage pneumatique à l'état vulcanisé.

7. Bandage pneumatique selon l'une quelconque des revendications précédentes, dans lequel la ceinture de travail (54) interne dans la direction radiale possède une largeur axiale qui est égale ou approximativement égale à la largeur de l'arc de la bande de roulement ou qui se situe dans une plage qui représente de 95 pour cent à 105 pour cent de la largeur de l'arc de la bande de roulement.

8. Bandage pneumatique selon l'une quelconque des revendications précédentes, dans lequel la ceinture de travail (56) externe, dans la direction radiale, possède une largeur axiale qui est inférieure, de préférence qui est inférieure, à concurrence d'au moins 5 pour cent, à celle de la ceinture de travail (54) interne dans la direction radiale ; et/ou la ceinture de travail (54) interne dans la direction radiale représente la ceinture de la structure de ceintures (50), la plus large, dans la direction axiale.

9. Bandage pneumatique selon l'une quelconque des revendications précédentes, dans lequel la ceinture (58) qui forme un angle relativement petit possède une largeur axiale qui se situe dans une plage qui représente de 70 pour cent à 80 pour cent de la largeur de l'arc de la bande de roulement.

10. Bandage pneumatique selon l'une quelconque des revendications précédentes, qui englobe en outre une ceinture de sommet (60) à titre de ceinture la plus externe, dans la direction radiale, de la structure de ceintures (50).

11. Bandage pneumatique selon l'une quelconque des revendications précédentes, qui englobe en outre une ceinture de transition qui est située le plus à l'intérieur, dans la direction radiale, des ceintures de travail (54, 56).

12. Bandage pneumatique selon la revendication 11, dans lequel la ceinture de transition comprend des éléments de renforcement parallèles qui forment un angle qui se situe dans une plage allant de 45 à 70 degrés, de préférence de 45 à 70 degrés vers la droite, avec la direction circonférentielle ; et/ou dans lequel la ceinture de transition possède une largeur axiale qui se situe dans une plage qui représente de 60 à 80 pour cent de la largeur de l'arc de la bande de roulement.

13. Bandage pneumatique selon l'une quelconque des revendications précédentes, dans lequel le rapport nominal d'aspect du bandage pneumatique est inférieur ou égal à 0,6.

14. Bandage pneumatique selon l'une quelconque des revendications précédentes, dans lequel la couche en caoutchouc faisant office d'élément d'espacement (64) s'étend sur une distance qui représente au moins 80 pour cent, de manière plus préférée au moins 95 pour cent de la distance axiale qui sépare les extrémités des bords de ceintures repliés (62), les plus internes dans la direction axiale.
